# EUROPÄISCHE PATENTSCHRIFT

(11) **EP 0 415 064 B1**
(45) Veröffentlichungstag und Bekanntmachung des Hinweises auf die Patenterteilung: **09.06.1993**
(21) Anmeldenummer: 90113999.8
(22) Anmeldetag: 21.07.1990
(51) Int. Cl.: B23Q 11/08

(54) **Abstreifer**
Wiper
Racleur

(30) Priorität: 28.08.1989 DE 3928380
(43) Veröffentlichungstag der Anmeldung: 06.03.1991
(73) Patentinhaber: Kabelschlepp Gesellschaft mit beschränkter Haftung, 57074 Siegen (DE)
(72) Erfinder: Wehler, Herbert, D-5908 Neunkirchen (DE); Wisser, Georg, D-5239 Luckenbach (DE)

(56) Entgegenhaltungen:
- EP-A- 0 230 120
- DE-A- 3 545 168
- DE-A- 3 736 628

## Beschreibung

Gegenstand der Erfindung ist ein Abstreifer für die Anordnung zwischen Abdeckkästen einer Teleskopabdeckung oder zwischen dem Support und der Führungsbahn einer Werkzeugmaschine oder für Paletten-Wechsler, mit einer Halteleiste, einer darin angeordneten offenen Aufnahme, einer darin befestigten Abstreiferlippe und einer Gleitleiste.

Aus der DE-OS 37 36 628 ist ein verfahrbarer Schiebetisch zum Wechseln von Werkzeugen bekannt, bei dem in einem winkelförmigen Formstück Ausnehmungen zur Aufnahme einer Abstreiferleiste mit Abstreifer und eine Bürstenleiste eingearbeitet sind. Bei dieser bekannten Anordnung sind Abstreiferteile in bewegungsrichtung hintereinander angeordnet und beeinflussen sich bezüglich der Abstreif- und Reinigungswirkung gegenseitig nicht. Für den Andruck an die Führungsbahn ist eine besondere Vorrichtung mit Druckfeder vorgesehen.

Aus der DE-AS 18 03 448 ist ein Abstreifer für die Anordnung zwischen Abdeckkästen einer Teleskopabdeckung bekannt, der aus einer Halteleiste, einer darin angeordneten Aufnahme und einer in dieser Aufnahme befestigten Abstreiferlippe besteht. Dieser bekannte Abstreifer hat den Mangel, daß die Abstreiferlippe aus einem relativ harten Material bestehen muß, weil sie gleichzeitig auch eine Stützfunktion hat.

Davon ausgehend liegt der Erfindung die **Aufgabe** zugrunde, einen verbesserten Abstreifer zu schaffen, dessen Abstreiflippe keine Stütz- oder Gleifunktionen übernehmen muß und deshalb aus einem weichen Material mit guten Abstreifeigenschaften bestehen kann und gegen die zu reinigende Führungsbahn vorgespannt wird.

Als technische **Lösung** wird dafür ein Abstreifer vorgeschlagen, bei dem die Gleitleiste U-förmig ausgebildet und mit vorgespannten Schenkeln in die Aufnahme eigesetzt ist und bei dem die Abstreiferlippe zwischen den vorgespannten Schenkeln derart gehalten ist, daß die Vorspannung auf die Abstreiferlippe übertragen wird.

Bei einer praktischen Ausführungsform kann such die Gleitleiste mit leistenförmigen, elastischen Auskragungen in der Aufnahme abstützen und an der Abstreiferlippe beiderseits mit Klemmrippen anliegen.

Als Herstellungsmaterial für die Gleitleiste hat sich ein Polytetrafluoräthylen (PTFE) und für die Abstreiferlippe ein thermoplastisches Elastomer bewährt. Die Abstreiferlippe kann aber auch aus einem weichen Filz oder einer Bürste bestehen.

Ein erfindungsgemäß ausgebildeter Abstreifer hat weiterhin den Vorteil, daß die Stütz- und Gleitfunktionen von der Gleitleiste übernommen werden, die deshalb aus einem härteren Material mit guten Gleit- und Verschleißeigenschaften bestehen kann, während die Abstreiferlippe aus einem anderen, weicheren Material mit besseren Abstreif- und Reinigungseigenschaften hergestellt werden kann. Dabei resultiert aus der Vorspannung der Gleitleiste in der Aufnahme der Halteleiste ein die Reinigungswirkung der Abstreiferlippe verbessernder Druck auf die zu reinigende Unterlage.

Weitere Einzelheiten und Vorteile ergeben sich aus der nachfolgenden Beschreibung der zugehörigen Zeichnungen, in denen bevorzugte Ausführungsbeispiele eines erfindungsgemäß ausgebildeten Abstreifers für zwei verschiedene Anwendungen schematisch dargestellt worden sind. In den Zeichnungen zeigen:

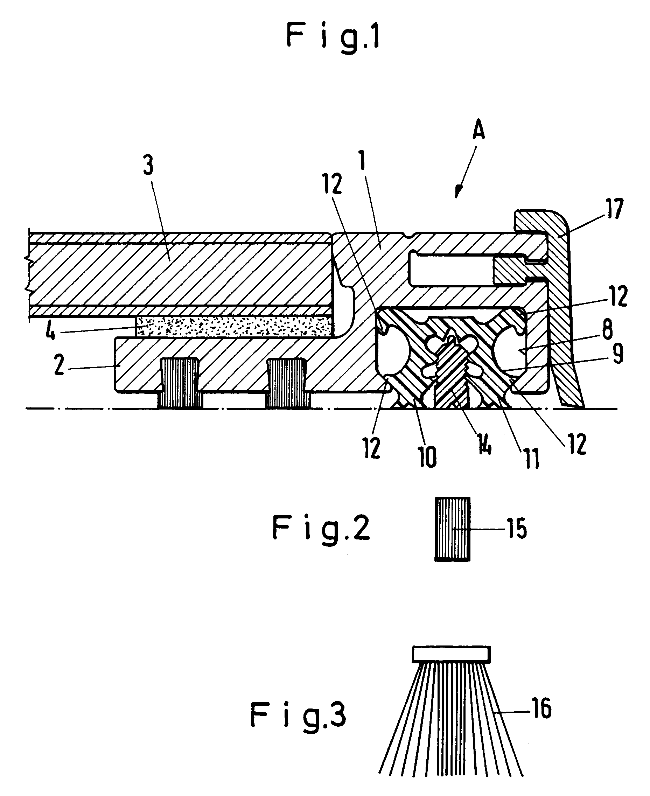

- Fig. 1: einen Abstreifer für die Anordnung zwischen Abdeckkästen einer Teleskopabdeckung im Querschnitt;
- Fig. 2: eine Abstreiferlippe aus Filz;

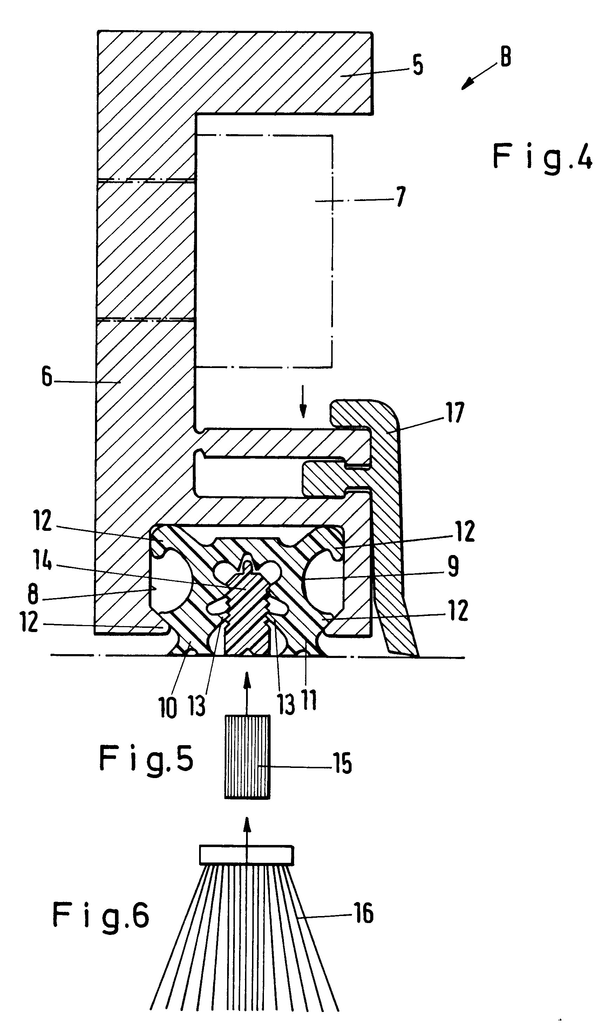

- Fig. 3: eine Abstreiferlippe in Bürstenform;
- Fig. 4: einen Abstreifer für die Anordnung zwischen dem Support und der Führungsbahn einer Werkzeugmaschine im Querschnitt;
- Fig. 5: eine Abstreiferlippe aus Filz;
- Fig. 6: eine Abstreiferlippe in Bürstenform.

Ein Abstreifer A für die Anordnung zwischen den Abdeckkästen einer Teleskopabdeckung hat eine Halteleiste 1 mit einem waagerechten Schenkel 2 für die Auflage einer Deckwand 3 eines Abdeckkastens unter Zwischenlage eines zweiseitigen Klebebandes 4.

Ein Abstreifer B für die Anordnung zwischen dem Support und der Führungsbahn einer Werkzeugmaschine hat eine Halteleiste 5 mit einem senkrechten Schenkel 6 und einer Bohrung zum Einsetzen einer Befestigungsschraube 7.

In den Halteleisten 1 und 5 beider Abstreifer A und B ist eine kammerartige, offene Aufnahme 8 vorgesehen, in die eine U-förmige Gleitleiste 9 unter Vorspannung eingesetzt ist, welche mit ihren Schenkeln 10,11 aus der Aufnahme 8 herausragt. Am äußeren Umfang der Gleitleiste sind leistenförmige, elastische Auskragungen 12 vorgesehen, die sich in der Aufnahme 8 abstützen. An der Innenseite der beiden Schenkel 10,11 sind Klemmrippen 13 angeordnet, welche die Vorspannung auf eine Abstreiferlippe 14 übertragen.

Während die Gleitleiste 9 aus einem härteren Werkstoff wie beispielsweise PTFE bestehen kann, ist es möglich, für die Abstreiferlippe ein anderes Material mit besseren Reinigungseigenschaften, beispielsweise ein thermoplastisches Elastomer zu benutzen.

Die Abstreiferlippe 14 kann aber auch aus einem Filz 15 oder einer Bürste 16 bestehen. Dabei werden sowohl der Filz 15 als auch die Bürste 16 zwischen die Schenkel 10,11 der Gleitleiste 9 eingesetzt, damit sie unter Vorspannung gehalten werden.

Bei beiden Ausführungsbeispielen sind die Halteleisten 1 und 5 an der Vorderseite mit einer Deckleiste 17 abgedeckt.

### Bezugszeichenliste

- 1: Halteleiste
- 2: Schenkel
- 3: Deckwand
- 4: Klebeband
- 5: Halteleiste
- 6: Schenkel
- 7: Befestigungsschraube
- 8: Aufnahme
- 9: Gleitleiste
- 10: Schenkel
- 11: Schenkel
- 12: Aufkragung
- 13: Klemmrippe
- 14: Abstreiferlippe
- 15: Filz
- 16: Bürste
- 17: Deckleiste

- A: Abstreifer
- B: Abstreifer

## Patentansprüche

1. Abstreifer für die Anordnung zwischen Abdeckkästen einer Teleskopabdeckung oder zwischen dem Support und der Führungsbahn einer Werkzeugmaschine oder für Paletten-Wechsler, mit einer Halteleiste (1,5), einer darin angeordneten, offenen Aufnahme (8), einer darin befestigten Abstreiferlippe (14) und einer Gleitleiste (9),
**dadurch gekennzeichnet,**
daß die Gleitleiste (9) U-förmig ausgebildet und mit vorgespannten Schenkeln (10,11) in die Aufnahme (8) eingesetzt ist und
daß die Abstreiferlippe (14) zwischen den vorgespannten Schenkeln (10,11) derart gehalten ist, daß die Vorspannung auf die Abstreiferlippe (14) übertragen wird.

2. Abstreifer nach Anspruch 1, dadurch gekennzeichnet, daß die Gleitleiste (9) sich mit leistenförmigen, elastichen Auskragungen (12) in der Aufnahme (8) abstützt und an der Abstreiferlippe (14) beiderseits mit Klemmrippen (13) anliegt.

3. Abstreifer nach Ansprüchen 1 und 2, dadurch gekennzeichnet, daß die Gleitleiste (9) aus einem Polytetrafluoräthylen (PTFE) besteht.

4. Abstreifer nach den Ansprüchen 1 und 2, dadurch gekennzeichnet, daß die Abstreiferlippe (14) aus einem thermoplastischen Elastomer besteht.

5. Abstreifer nach den Ansprüchen 1 und 2, dadurch gekennzeichnet, daß die Abstreiferlippe aus einem Filz (15) besteht.

6. Abstreifer nach den Ansprüchen 1 und 2, dadurch gekennzeichnet, daß die Abstreiferlippe aus einer Bürste (16) besteht.

## Claims

1. Stripper for the arrangement between cover boxes of a telescopic covering or between the slide rest and guideway of a machine tool or for pallet-changers, having a holding rail (1, 5), a therein disposed, open receiving fixture (8), a therein fastened stripper lip (14) and a slide rail (9), characterised in that the slide rail (9) is of U-shaped configuration and is inserted by pretensioned legs (10, 11) into the receiving fixture (8) and in that the stripper lip (14) is held between the pre-tensioned legs (10, 11) in such a way that the pretensioning is transmitted to the stripper lip (14).

2. Stripper according to Claim 1, characterised in that the slide rail (9) is supported by rail-shaped, elastic protrusions (12) in the receiving fixture (8) and bears by means of clamping ribs (13) against both sides of the stripper lip (14).

3. Stripper according to Claims 1 and 2, characterised in that the slide rail (9) consists of a polytetrafluoroethylene (PTFE).

4. Stripper according to Claims 1 and 2, characterised in that the stripper lip (14) consists of a thermoplastic elastomer.

5. Stripper according to Claims 1 and 2, characterised in that the stripper lip consists of a felt (15).

6. Stripper according to Claims 1 and 2, characterised in that the stripper lip consists of a brush (16).

## Revendications

1. Racleur destiné à être monté entre les éléments de recouvrement d'un couvercle télescopique ou entre le chariot et la glissière de guidage d'une machine-outil, ou destiné à des dispositifs échangeurs de palettes, comprenant une barre porteuse (1, 5), un logement ouvert (8) ménagé à l'intérieur, une lèvre racleuse (14) fixée à l'intérieur et une barre de glissement (9), caractérisé en ce que la barre de glissement (9) a la forme d'un U et est insérée dans le logement (8) par l'intermédiaire de branches précontraintes (10, 11), et en ce que la lèvre racleuse (14) est maintenue entre les branches précontraintes (10, 11) de façon que la précontrainte lui soit transmise.

2. Racleur selon la revendication 1, caractérisé en ce que la barre de glissement (9) prend appui dans le logement (8) par l'intermédiaire de saillies élastiques (12) en forme de barrettes et est appliquée contre les deux côtés de la lèvre racleuse (14) par l'intermédiaire de nervures de serrage (13).

3. Racleur selon les revendications 1 et 2, caractérisé en ce que la barre de glissement (9) est réalisée en polytétrafluoréthylène (PTFE).

4. Racleur selon les revendications 1 et 2, caractérisé en ce que la lèvre racleuse (14) est réalisée en élastomère thermoplastique.

5. Racleur selon les revendications 1 et 2, caractérisé en ce que la lèvre racleuse est réalisée en feutre (2).

6. Racleur selon les revendications 1 et 2, caractérisé en ce que la lèvre racleuse est réalisée sous la forme d'une brosse (16).
